# EUROPÄISCHE PATENTSCHRIFT

(11) **EP 0 551 825 B1**
(45) Veröffentlichungstag und Bekanntmachung des Hinweises auf die Patenterteilung: **26.11.1997**
(21) Anmeldenummer: 93100129.1
(22) Anmeldetag: 07.01.1993
(51) Int. Cl.: B60J 5/00, B60R 13/08

(54) **Isolationsteil**
Insulating element
Elément d'isolation

(30) Priorität: 17.01.1992 DE 9200501 U; 20.03.1992 DE 4209024
(43) Veröffentlichungstag der Anmeldung: 21.07.1993
(73) Patentinhaber: Illbruck GmbH, D-51381 Leverkusen (DE)
(72) Erfinder: Illbruck, Michael, W-5090 Leverkusen 3 (DE); Gottschild, Frank, W-3180 Wolfsburg (DE)
(74) Vertreter: Müller, Enno, Dipl.-Ing.

(56) Entgegenhaltungen:
- EP-A- 0 121 947
- DE-A- 3 510 018
- DE-C- 2 214 079
- DE-U- 8 909 961
- US-A- 2 124 463

## Beschreibung

Die Erfindung betrifft ein in einem durch eine Innenwandverkleidung und eine Innenwand einer Kraftfahrzeugtür geschaffenen Hohlraum anordbares Isolationsteil zur Schalldämmung bzw. Schalldämpfung und vorzugsweise Feuchtigkeitssperre, auf Schaumstoffbasis, mit einer durchgehend etwa gleichen, im Verhältnis zu dem Raum zwischen den Innenflächen der Innenwandverkleidung und der Innenwand dünnen Wandstärke, wobei das Isolationsteil profiliert ist. Ein derartiges Isolationsteil ist z.B. in der DE-A-3 510 018 oder DE-U-89 09961 dargestellt.

Man ist bereits seit längerem dazu übergegangen, in dem Hohlraum von Fahrzeugtüren, beispielsweise zwischen dem Innen- und dem Außenblech, eine Feuchtigkeitssperre in Form einer Folie anzuordnen. Hierzu wird beispielsweise auf das DE-U-78 04 040 verwiesen.

In der Regel bestehen Fahrzeugtüren aus einem Innen- und einem Außenblech, die schon zur Aufnahme des Türöffnungsmechanismus und der Fensterkurbel sowie der Fensterscheibe in geöffnetem Zustand des Fensters distanziert zueinander angeordnet sind. Weiter schließt sich nach innen noch eine weitere Wand an, die zur Aufnahme bzw. unmittelbaren Ausgestaltung einer Armlehne, eines Ablageraumes, eines Aschenbechers oder dergleichen gestaltet ist. Neben der Abdichtung des Fahrzeug-Innenraumes gegen etwa eindringende Feuchtigkeit wird zunehmend auch gewünscht, eine wirksame Schalldämmung und bzw. oder Schalldämpfung zu erreichen.

In diesem Zusammenhang ist weiter die DE-A-35 10 018 bekannt geworden. Hier besteht das Isolationsteil, das auch Schalldämm- bzw. -dämpfeigenschaften aufweist, aus einem Schaumstoffzuschnitt mit der Türaußenseite zugewandt aufgebrachter Folie, welche die Feuchtigkeitssperre erbringen soll. Der Schaumstoffzuschnitt ist derart geformt, daß er an der Metallwand der Tür im wesentlichen vollflächig anliegt, soweit nicht dort Durchbrechungen vorgesehen sind. Darüber hinaus ist das Schaumstoffteil im Vergleich zu der Breite bzw. Dicke des Hohlraumes, in dem es angeordnet ist, relativ dickwandig.

Des weiteren ist auf das Gebrauchsmuster DE-U-89 09 961 hinzuweisen. Dieses Gebrauchsmuster betrifft ein doppelwandig ausgelegtes Isolationsteil. Die beiden Lagen des Isolationsteils stützen sich gegenseitig aneinander. Aufgrund der zweilagigen, distanzierten Struktur ist es insgesamt vergleichsweise starr.

Ausgehend hiervon wird eine technische Problemstellung darin gesehen, ein weiteres, möglichst verbessertes Isolationsteil anzugeben.

Hierzu ist beim Gegenstand der Erfindung darauf abgestellt, daß das einlagige Isolationsteil im Querschnitt einen im wesentlichen U-förmigen Wulst ausbildet, gegebenenfalls mehrfach, insbesondere jedoch randseitig, der zu einer Abstützung der einen Lage des Isolationsteils über einen relativ kurzen Abstand an beiden Innenflächen der Innenwandverkleidung bzw. der Innenwand führt. Zwischen zwei solchen an beiden Innenflächen abgestützter Wulstbildungen ist dann ein frei schwingbarer Abschnitt des Isolationsteils ausgebildet. Überraschend hat sich gezeigt, daß in dem Bauteil Kraftfahrzeugtür durch Zwischenschaltung eines derart dünnwandigen, profilierten Schaumstoffteiles, das sich wechselweise an beiden Innenflächen abstützt, unter Bildung zwischengeschalteter frei schwingbarer Abschnitte eine sehr wirksame Reduzierung des Geräuschpegels im Innenraum des Kraftfahrzeuges erreichen läßt. In dem leicht herstellungsmäßig thermoverformbaren Isolationsteil lassen sich unterschiedliche schwingbare Bereiche je nach der geforderten Schalldämmung angepaßt an den jeweiligen Kraftfahrzeugtyp verwirklichen. Es ist weiter vorteilhaft, das Isolationsteil aus geschlossenzelligem Schaumstoff herzustellen. Hierdurch wird zugleich die gewünschte Feuchtigkeitssperre erreicht. Darüber hinaus werden auch weiterhin zufriedenstellende Schalldämpfung und Schalldämpfungsresultate erzielt. Es ist nicht erforderlich, zur Schalldämpfung offenzelligen Schaumstoff einzusetzen. Hier treten die frei schwingbaren Bereiche in Wirkung. Durch eine entsprechende Gestaltung lassen sich auch die Dämm- bzw. Dämpfeigenschaften in Richtung höher- oder niederfrequenter einstellen. Gleichwohl ist es aber auch möglich, und gemäß einem weiter unten noch beschriebenen Ausführungsbeispiel gegebenenfalls auch bevorzugt, eine (zusätzliche) Schicht offenporigen Schaumstoffes vorzusehen. Diese ist dann bevorzugt mit der Schicht aus geschlossenzelligem Schaumstoff verbunden, bspw. kaschierverbunden. Im übrigen verhalten sich aber bei dieser Ausführungsform diese beiden verbundenen Schichten praktisch gleich wie die einzelne zuvor beschriebene Schicht. Sie sind weiterhin vergleichsweise dünn (in Bezug auf den Hohlraum, in welchem sie angeordnet sind) ausgebildet und stützen sich über den im wesentlichen U-förmigen Wulst, gegebenenfalls mehrfach, insbesondere jedoch randseitig, an beiden Innenflächen der Innenwandverkleidung bzw. der Innenwand ab und sind (praktisch allein) über diese Abstützung in dem Hohlraum lagegesichert, was entsprechend auch auf die erstbeschriebene Ausführungsform zutrifft. Bei dem zweischichtigen Aufbau stützt sich im Detail nur an der einen Innenwand jeweils die geschlossenporige und an der anderen Innenwand jeweils die offenporige Schicht ab. In Ausgestaltung ist vorgesehen, daß das Isolationsteil durch die Wulstbildung in Zusammenwirkung mit den Innenwänden im Einbauzustand zu mehreren, im wesentlichen abgeschlossenen Luftkammern unterschiedlicher Größe führt. In weiterer Ausgestaltung ist es hinsichtlich eines Randwulstes vorteilhaft, diesen im wesentlichen durchgängig umlaufend auszubilden. Gleichzeitig sind hiermit auch einbautechnische Vorteile erzielt. Der umlaufende Randwulst führt nicht nur zur Abstützung an der Innenwandverkleidung und der Innenwand, sondern kann zugleich dort auch verklebt werden, indem in den Umbiegebereichen entsprechend breitflächige Bereiche geschaffen werden. Darüber hinaus hat es sich als vorteilhaft erwiesen, außen an den Randwulst anschließend eine Dichtlippe auszubilden. Diese Dichtlippe besteht aus einem im Vergleich zu dem Randwulst kleinen lippenartig abgewinkelten Vorsprung. Dieser liegt im Einbauzustand im wesentlichen stirnseitig an einer Innenfläche der Türverkleidung an. Dadurch, daß die Gesamtabmessungen des Isolationsteils insbesondere im Bereich des Randwulstes und weiter insbesondere im Bereich der in Rede stehenden Lippe etwas größer sind als der zur Verfügung stehende Raum, ergibt sich im Einbauzustand eine Vorspannung in dem Isolationsteil, welche die Stirnfläche der Lippe gegen die betreffende Innenwand drückt. Es ist für die Erfindung nicht wesentlich, daß die genannten Ausbildungen, wie insbesondere die wechselseitige Anlage an zugeordneten Innenflächen im Bereich einer Wulstbildung durchgehend und ausnahmslos im Einbauzustand gegeben sind. Erforderlich ist allein, daß diese Bedingungen im wesentlichen im Einbauzustand vorliegen. Die genannte Dichtlippe unterbindet den Austritt der Restenergie (Luftschall) am äußersten Rand der Türinnenverkleidung.

Diese Dichtlippe kann die bei herkömmlichen Konstruktionen bekannte Gummidichtlippe an der Türinnenverkleidung ersetzen. Die genannte Ausbildung des Isolationsteils erlaubt nicht nur die Anpassung an die akustischen Erfordernisse durch unterschiedlich große Luftkammern mit entsprechend frei schwingbaren Abschnitten des Isolationsteils, sondern darüber hinaus auch noch eine höhenstufenartige Profilierung des Isolationsteils innerhalb der einzelnen abgeschlossenen bzw. im wesentlichen abgeschlossenen Kammern. In weiterer vorteilhafter Ausgestaltung kann auch noch vorgesehen sein, daß in einigen oder allen der so geschaffenen Kammern ein Absorber in Form beispielsweise eines offenzelligen Schaumstoffes, beispielsweise Polyurethanschaumstoffes angeordnet ist. In weiterer Ausgestaltung ist auch vorgesehen, daß das Isolationsteil im Bereich des genannten, im wesentlichen umlaufenden Randwulstes mit der Tür verklipst ist. Hierzu ist es vorteilhaft, auch eine Verklebung vorzusehen. In weiterer Ausgestaltung der Erfindung wird die Kleberaupe hierbei über Perforationen durchgehend gelegt, welche zur Aufnahme der Klipse im Isolationsteil vorgesehen sind. Beim Montieren der Klipse wird ein Teil der Kleberaupe somit von der Stirnfäche des Klipses mitgeschleppt, wodurch sich eine auch durch Verklebung gesicherte Halterung im Bereich der Verklipsung erzielen läßt. Besonders bevorzugt ist es hierbei, angrenzend an den äußeren, umlaufenden Abdichtwulst eine - von dem Wulst her betrachtet - als Tal ausgeformte Klebe-/Verklipszone auszubilden.

Nachstehend ist die Erfindung des weiteren anhand der beigefügten Zeichnungen, die jedoch lediglich ein Ausführungsbeispiel betrifft, erläutert. Hierbei zeigt:
- Fig. 1: eine Draufsicht auf eine Seite des Isolationsteils;
- Fig. 2: eine Draufsicht auf die andere (Breit)-Seite des Isolationsteils;
- Fig. 3: eine entsprechende Draufsicht auf eine Breitseite einer Innenwandverkleidung einer Kraftfahrzeugtür;
- Fig. 4: eine Draufsicht auf die andere Breitseite der Innenwandverkleidung gemäß Figur 3;
- Fig. 5: eine erste schematische Querschnittsansicht des Isolationsteils im Einbauzustand zwischen der Innenwandverkleidung und einer Innenwand der Kraftfahrzeugtür;
- Fig. 6: eine weitere Schnittdarstellung bei einem konkreten Ausführungsbeispiel;
- Fig. 7: eine Darstellung gemäß Figur 6, geschnittenen in einer hierzu parallelen Ebene;
- Fig. 8: eine Darstellung gemäß Fig. 5, bei doppellagiger Ausführung;
- Fig. 9: eine Darstellung gemäß Fig. 6, bei doppellagiger Ausführung; und
- Fig. 10: eine Ausführung gemäß Fig. 7, bei doppellagiger Ausführung.

Dargestellt und beschrieben ist ein Isolationsteil 1 zum Einbau in einer Kraftfahrzeugtür 2 (vgl. beispielsweise Figuren 5 und 6).

Das Isolationsteil 1 ist beim Ausführungsbeispiel (wiederum mit Bezug zu den Figuren 5 und 6) zwischen einer Innenwandverkleidung 3 und einer Innenwand 4 einer Kraftfahrzeugtür angeordnet. Gegenüberliegend, in Richtung nach außen, zu der Innenwand 4 ist eine Außenwand 5 der Kraftfahrzeugtür zu erkennen. Zwischen den Wänden 4 und 5 ist eine Fensterscheibe 25 angedeutet, welche auch, soweit es sich um ein betätigbares Fenster handelt, in dem zwischen den Wänden 4 und 5 geschaffenen Hohlraum aufnehmbar ist.

Das Isolationsteil 1 besteht aus einem dünnwandigen Schaumstoffteil. Die Dünnwandigkeit ist gegeben im Verhältnis zu dem Raum 6 zwischen Innenwand 4 und der Innenwandverkleidung 3. Beispielsweise beträgt die Dicke des Schaumstoffteils des Isolationsteils 1 1/10 bis 1/20 des jeweiligen senkrechten Abstandes dieser Wände. Wie sich aber aus den Figuren 5 und 6 ergibt, ist dieser Abstand sehr variabel, so daß ersichtlich hiermit ein mittleres Maß angesprochen ist.

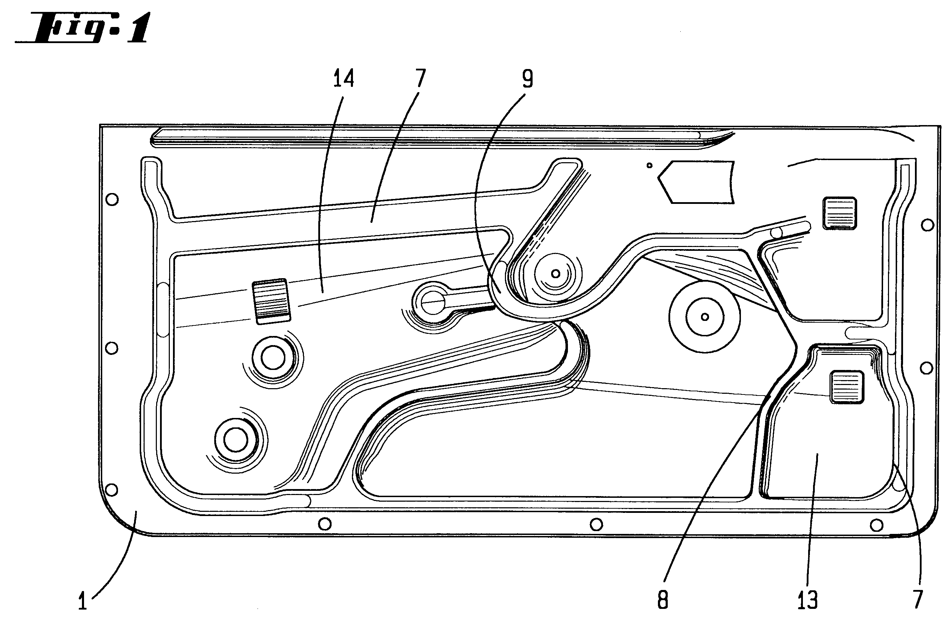

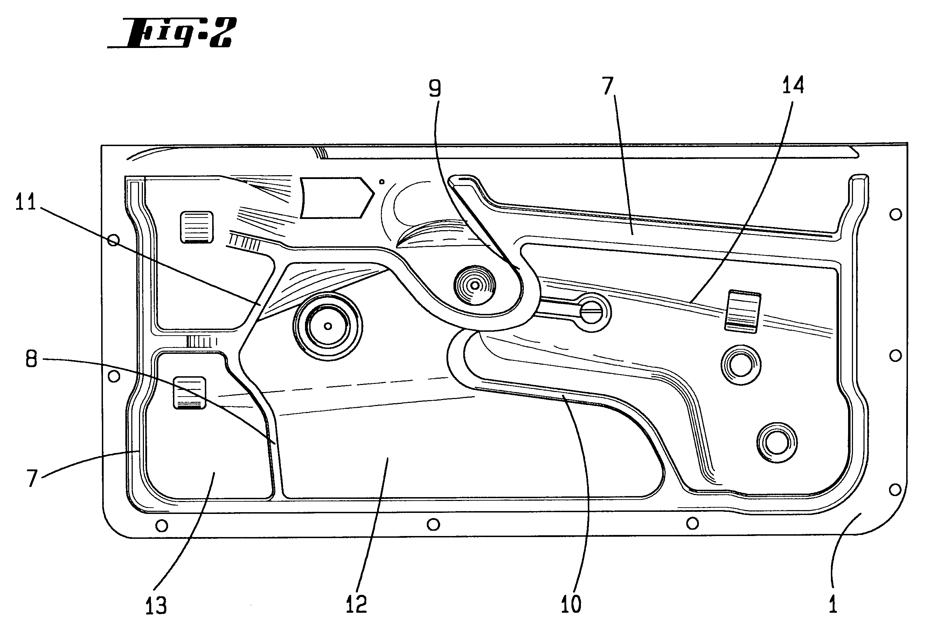

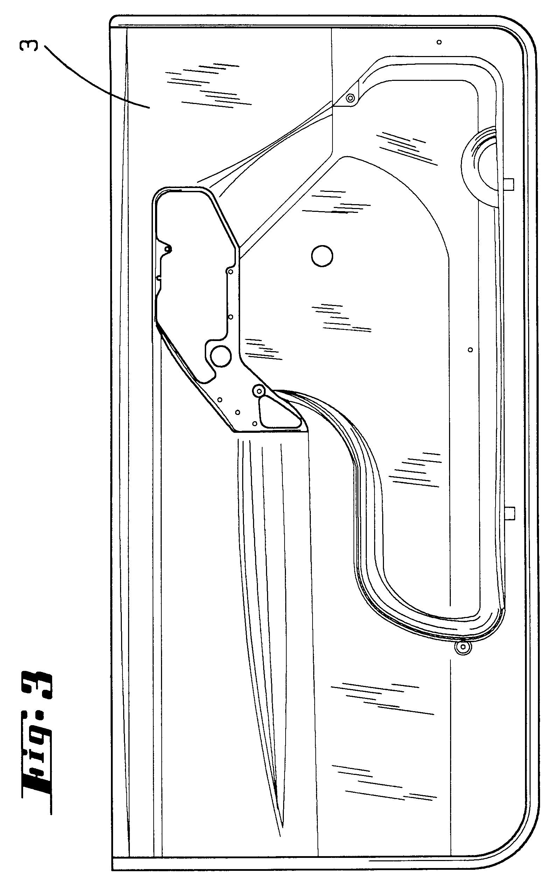

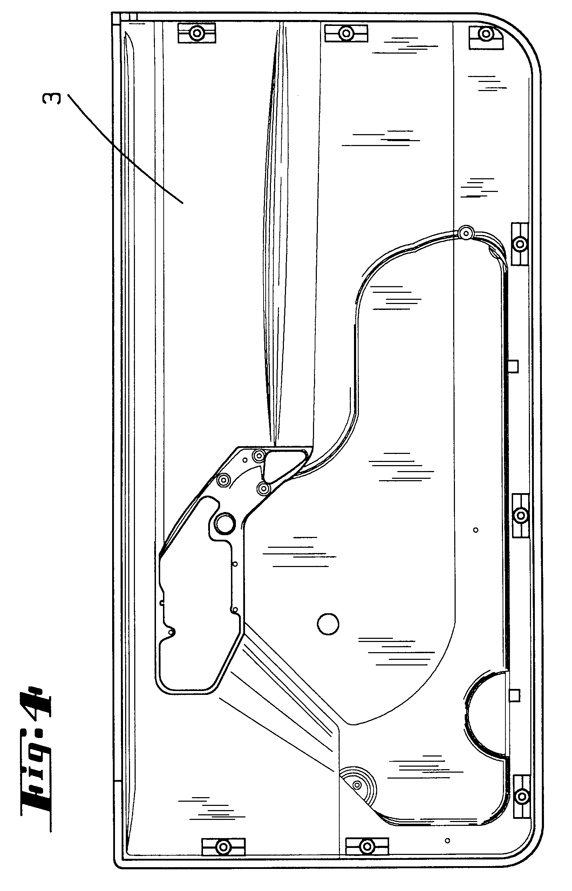

Weiter ist das Isolationsteil 1 profiliert, weist nämlich insbesondere einen im wesentlichen umlaufenden Randwulst 7 auf. Dieser Randwulst 7 ist im Querschnitt bevorzugt im wesentlichen U-förmig ausgebildet. Er läßt hiermit über eine geringe Länge des Isolationsteiles 1 eine praktisch gleichzeitige Anlage an der Innenwand 4 bzw. der Innenwandverkleidung 3 erreichen. Das Isolationsteil ist gleichsam im Einbauzustand zwischen diesen Wänden aus seiner eigenen Struktur heraus eingeklemmt. Neben diesem randseitigen Wulst 7 sind insbesondere in den Figuren 1 und 2 weitere, an die konstruktiven Gegebenheiten angepaßte Wulstbildungen 8, 9, 10 und 11 zu erkennen. Zwischen diesen Wulstbildungen 7, 8, 9, 10, 11 erstrecken sich frei schwingbare Abschnitte 12, 13, 14 usw. Diese frei schwingbare Abschnitte sind ersichtlich von unterschiedlicher Größe. Hierdurch lassen sich verschieden frequente Anteile des Schalls dämmen. Dadurch, daß das Isolationsteil 1 im übrigen aus einem geschlossenzelligem Schaumstoff, beispielsweise Polyethylen, besteht, ist gleichzeitig auch durch das Isolationsteil 1 die gewünschte Feuchtigkeitssperre erreicht.

Die Dichte des Schaumstoffes ist im übrigen bevorzugt innerhalb eines Bereiches von 30kg bis 120kg pro m³ gewählt. Zusammen mit der Ausbildung der frei schwingbaren Abschnitte 12, 13, 14 läßt sich hiermit eine sehr weitreichende genaue Abstimmung auf die jeweiligen Lärmprobleme erreichen.

Darüber hinaus können die so geschaffenen Teilhohlräume 15, 16, 17, 18, 19, 20 usw (vergleiche hierzu wieder Figuren 5 und 6) auch noch mit einem Absorber, wie etwa offenzelligem Polyuretahn-Schaumstoff ausgefüllt sein. Natürlich können auch nur einzelne dieser Teilhohlräume mit dem Absorber ausgefüllt sein. Hierdurch ist eine weitere Einstellmöglichkeit im Hinblick auf spezifische Lärmquellen geschaffen.

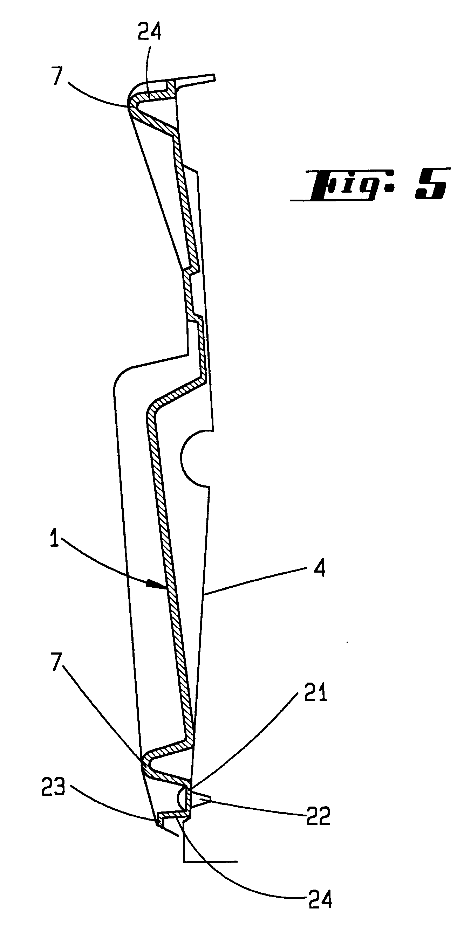

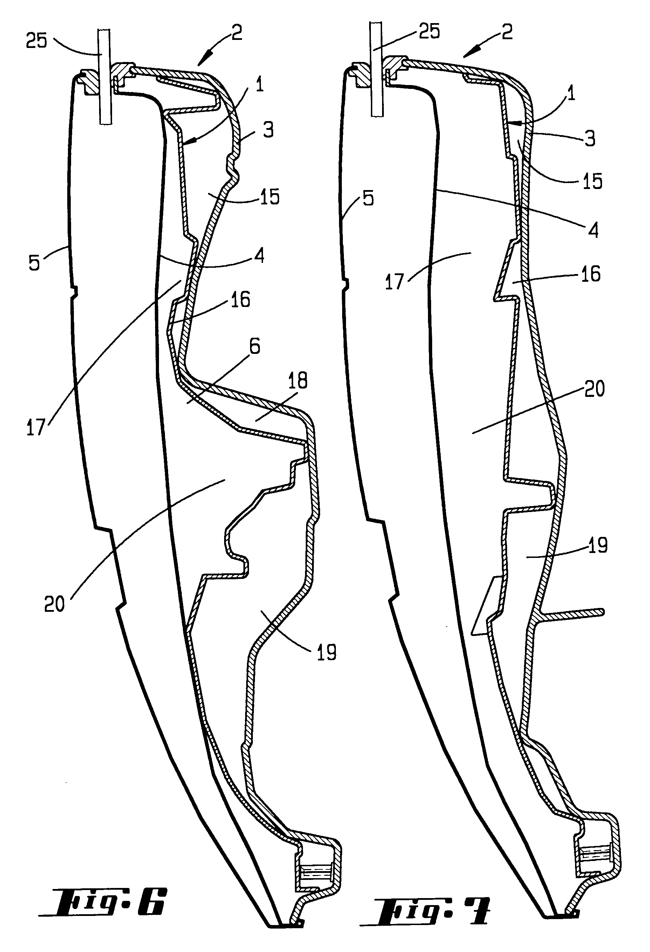

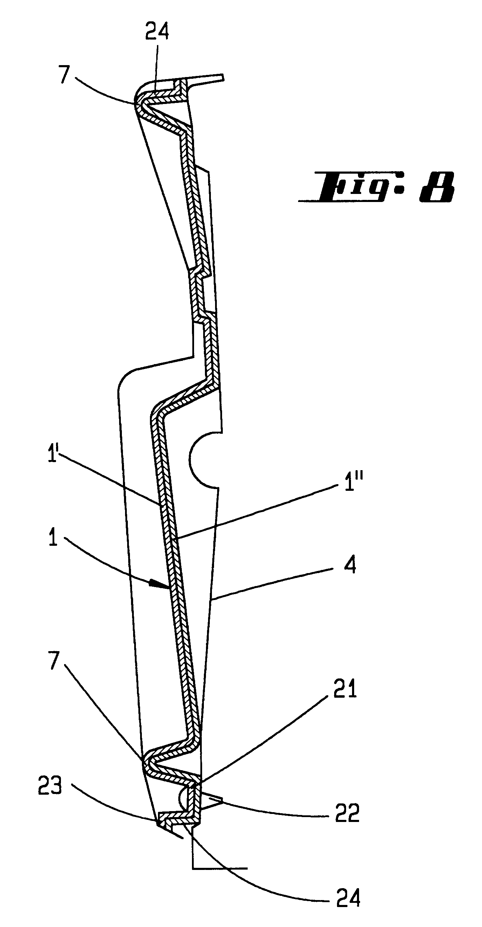

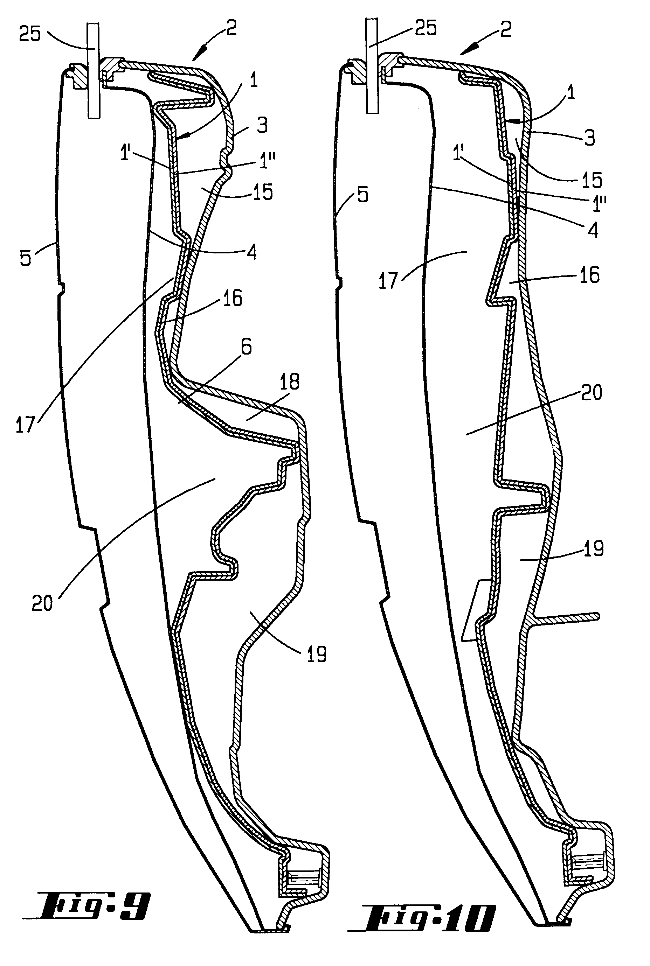

In den Figuren 3 und 4 sind die entsprechenden Außen- und Innenseiten der Türinnenverkleidung 3 dargestellt. Es ist ersichtlich, daß gegenüber dem Isolationsteil 1 gemäß den Figuren 1 bzw. 2 wesentlich weniger Profilierungen gegeben sind. Erst durch das Isolationsteil 1 und die dort gegebenen, die einzelnen Luftkammern unterteilende Wülste, ergibt sich in Zusammenwirkung mit der Türinnenverkleidung 3 und der Türwand 4 das angesprochene vorteilhafte akkustische System.

Insbesondere aus der schematischen Darstellung gemäß Figur 5 ist auch zu erkennen, daß sich zumindest teilweise an den Randwulst 7 durch gleichfalls im wesentlichen U-förmige, jedoch umgekehrt öffnende Gestaltung ein Befestigungsabschnitt 21 anschließt, der beispielsweise durch einen Klips 22 durchsetzt sein kann, welcher das Isolationsteil 1 mit der Türwand 4 verbindet. Zudem ist bevorzugt dieser Befestigungsabschnitt 21 als Klebeabschnitt vorgesehen. Auf die Außenfläche, d.h. die der Türwand 4 zugewandte Fläche des Befestigungsabschnittes 21 wird hierzu eine Kleberaupe aufgetragen. Eine in dem Befestigungsabschnitt 21 bereits vorgestanzte Öffnung für den Befestigungsklips 22 wird hierbei von der Kleberaupe überdeckt, so daß beim Einsetzen des Klipses 22 diese Kleberaupe von dem Klips 22 durchstoßen wird und so eine innige Klebeverbindung auch zusätzlich zu der Klipswirkung erreicht wird.

Weiter außenseitig anschließend an den umlaufenden Randwulst 7 bzw. den Befestigungsabschnitt 21 ist eine integral aus dem Isolationsteil 1 ausgeformte Dichtlippe 23 vorgesehen. Diese besteht aus einem im Vergleich zu dem Randwulst 7 kleinen, lippenartig abgewinkelten Vorsprung. Wie sich insbesondere aus der Darstellung gemäß Figur 5 ergibt, ist der lippenartige Vorsprung bzw. die Randlippe 23 im wesentlichen im Querschnitt rechtwinklig zu den vorhergehenden Stegbereichen 24 ausgebildet. In diesem Zusammenhang ist es bevorzugt, die äußeren Abmessungen des Isolationsteils so vorzusehen, daß eine gewisse Übergröße bezüglich der tatsächlichen Einbaumaße gegeben ist. Hierdurch ergibt sich eine ohne weiteres aufgrund der flexiblen Eigenschaften des Schaumstoffes mögliche Einfederung nach innen des Steges 24 bzw. der Lippe 23, so daß diese mit einer gewissen Vorspannung an der Innenfläche der Türinnenverkleidung anliegt. In gleicher Weise kann im übrigen auch der Randwulst 7 oder die sonstigen genannten Wülste mit einem gewissen Übermaß ausgebildet sein, so daß sich eine feste Einbindung des Isolationsteils in den Hohlraum zwischen der Innenwandverkleidung und der Türwand im Einbauzustand ergibt. Das Isolationsteil 1 läßt sich durch thermische Verformung in der dargestellten Weise herstellen. Die angesprochene Grundstruktur des Isolationsteil 1, wulstartige Verformungen bei vergleichsweise kleiner Dicke (im Bereich davon 1/10 bis 1/20 bezogen auf die jeweilige Wulstdicke) ergibt auch eine formstabile Struktur des Isolationsteiles 1. Dieses läßt sich vorteilhaft zum Einbau handhaben. Die Stabilität entspricht etwa der einen starren Gebildes, wobei jedoch tatsächlich das Isolationsteil aus einem relativ weichen Schaumstoff besteht.

In den Figuren 8 bis 10 sind Ausführungsbeispiele dargestellt, bei welchen das Isolationsteil 1 zweilagig ausgebildet ist, nämlich aus einer Lage geschlossenzelligen Schaumstoffes 1' und einer Lage offenzelligen Schaumstoffes 1'' besteht. Im übrigen sind aber die gleichen Verhältnisse gegeben, wie weiter vorne bereits in Bezug auf das einlagige Isolationsteil beschrieben. Die Zweilagigkeit ist so vorgenommen, daß praktisch das Verhalten eines einlagigen Isolationsteils (weiterhin) gegeben ist. Insbesondere ist keine Kammerung zwischen den Schichten 1' und 1'' vorgesehen.

## Patentansprüche

1. In einem durch eine Innenwandverkleidung (3) und eine Innenwand (4) einer Kraftfahrzeugtür (2) geschaffenen Hohlraum (6) anordbares Isolationsteil (1) zur Schalldämmung bzw. -dämpfung und vorzugsweise Feuchtigkeitssperre, auf Schaumstoffbasis, mit einer durchgehend etwa gleichen, im Verhältnis zu dem Raum zwischen den Innenflächen der Innenwandverkleidung (3) und der Innenwand (4) dünnen Wandstärke, wobei das Isolationsteil (1) profiliert ist, gekennzeichnet durch einen insbesondere randseitig ausgebildeten, im Querschnitt im wesentlichen U-förmigen Wulst (7) der zu einer wechselweisen Abstützung des Isolationsteils an beiden Innenflächen der Innenwandverkleidung (3) bzw. Innenwand (4) führt, wobei zwischen zwei solcher an beiden Innenflächen abgestützter Wulstbildungen (7, 8 etc.) sich ein frei schwingbarer Abschnitt (13) des Isolationsteils (1) erstreckt.

2. Isolationsteil nach Anspruch 1, dadurch gekennzeichnet, daß das Isolationsteil (1) durch die Wulstbildung (7, 8 etc.) in Zusammenwirkung mit den Innenwänden im Einbauzustand zu mehreren, im wesentlichen abgeschlossenen Luftkammern (15, 16 etc.) unterschiedlicher Größe führt.

3. Isolationsteil nach einem oder mehreren der vorhergehenden Ansprüche, dadurch gekennzeichnet, daß ein Randwulst (7) im wesentlichen durchgängig umlaufend ausgebildet ist.

4. Isolationsteil nach einem oder mehreren der vorhergehenden Ansprüche, dadurch gekennzeichnet, daß außen an den Randwulst (7) anschließend eine Dichtlippe (23) ausgebildet ist.

5. Isolationsteil nach Anspruch 4, dadurch gekennzeichnet, daß die Dichtlippe (23) aus einem im Vergleich zu dem Randwulst (7) kleinen lippenartig abgewinkelten Vorsprung besteht.

6. Isolationsteil nach Anspruch 4 oder 5, dadurch gekennzeichnet, daß ein Randabschnitt (24) des Isolationsteils (1) unter rechtwinkliger, nach außen weisender Abwinklung in die Dichtlippe (23) ausläuft.

7. Isolationsteil nach einem oder mehreren der vorhergehenden Ansprüche, dadurch gekennzeichnet, daß das Isolationsteil thermoplastisch verformt ist.

8. Isolationsteil nach einem oder mehreren der vorhergehenden Ansprüche, dadurch gekennzeichnet, daß ein Befestigungsabschnitt (21) ausgebildet ist, der über Perforationen für Befestigungsklipse (22) verfügt.

9. Isolationsteil nach Anspruch 8, dadurch gekennzeichnet, daß eine Kleberaupe auf dem Befestigungsabschnitt (21) eine Perforationsöffnung für einen Klips (22) überdeckend ausgebildet ist.

10. Isolationsteil nach einem oder mehreren der vorhergehenden Ansprüche, dadurch gekennzeichnet, daß ein einschichtiger Aufbau aus einem geschlossenzelligen Schaumstoff vorliegt.

11. Isolationsteil nach einem oder mehreren der vorhergehenden Ansprüche, dadurch gekennzeichnet, daß ein zweischichtiger Aufbau (Schichten 1' und 1'') gegeben ist, aus einem geschlossenzelligen und einem offenzelligen Schaumstoff.

## Claims

1. Insulating part (1) for sound insulation or damping, and preferably a moisture barrier, capable of arrangement in a hollow space (6) created by an inner wall cladding (3) and an inner wall (4) of a motor vehicle door (2) based on foamed material having a continuous, approximately uniform, thin wall thickness in relation to the space between the internal surfaces of the inner wall cladding (3) and the inner wall (4), the insulating part (1) having a profile shape, characterised by a bulge (7) constructed especially at the edge end in essentially U-shaped cross section which results in alternating support of the insulating part on both internal surfaces of the inner wall cladding (3) or inner wall (4), wherein a section (13) of the insulating part (1) capable of freely oscillating extends between two such bulge formations (7, 8, etc) supported on both internal surfaces.

2. Insulating part according to Claim 1, characterised in that due to the bulge formation (7, 8, etc) working together with the inner walls the insulating part (1) results in the fitted state in several essentially closed air chambers (15, 16, etc) of differing size.

3. Insulating part according to one or more of the preceding claims characterised in that an edge bulge (7) is constructed in essentially continuous circumferential manner.

4. Insulating part according to one or more of the preceding claims characterised in that externally adjoining the edge bulge (7) a sealing lip (23) is constructed.

5. Insulating part according to Claim 4 characterised in that the sealing lip (23) consists of a projection angled in the manner of a lip which is small in comparison with the edge bulge (7).

6. Insulating part according to Claim 4 or 5 characterised in that an edge section (24) of the insulating part (1) runs out into the sealing lip (23) in a right-angled bend pointing outwardly.

7. Insulating part according to one or more of the preceding claims characterised in that the insulating part is thermoplastically moulded.

8. Insulating part according to one or more of the preceding claims characterised in that a fastening section (21) is constructed which has holes for fastening clips (22).

9. Insulating part according to Claim 8 characterised in that an adhesive bead on the fastening section is constructed covering a hole opening for a clip (22).

10. Insulating part according to one or more of the preceding claims characterised in that there is a single-layered construction made from a closed-cell foamed material.

11. Insulating part according to one or more of the preceding claims characterised in that there is a double-layered construction (layers 1' and 1'') made from a closed-cell and an open-cell foamed material.

## Revendications

1. Pièce d'isolation (1) phonique ou d'amortissement du bruit et avantageusement destinée à servir de barrière contre l'humidité, à base de matériau alvéolaire et susceptible d'être disposée dans un espace creux (6) créé par un habillage (3) de paroi intérieure et une paroi intérieure (4) d'une portière (2) de véhicule automobile, la pièce d'isolation (1) présentant une épaisseur de paroi mince continue et sensiblement constante relativement à l'espace entre les surfaces intérieures de l'habillage (3) de paroi intérieure et de la paroi intérieure (4), et la pièce d'isolation (1) étant profilée, caractérisée par un bourrelet (7), réalisé en particulier du côté du bord avec une section transversale sensiblement en forme de U et qui permet un appui alterné de la pièce d'isolation sur les deux surfaces intérieures, à savoir l'habillage (3) de paroi intérieure ou la paroi intérieure (4), et en ce qu'entre deux formations de bourrelets (7, 8, etc.) appuyées sur les deux surfaces intérieures, s'étend une partie (13) de la pièce d'isolation susceptible d'osciller librement.

2. Pièce d'isolation selon la revendication 1, caractérisée en ce que la pièce d'isolation (1) forme, par l'intermédiaire de la formation de bourrelet (7, 8, etc.), et en coopération avec les parois intérieures à l'état monté, plusieurs chambres à air (15, 16, etc.) sensiblement fermées et de différentes tailles.

3. Pièce d'isolation selon l'une ou plusieurs des revendications précédentes, caractérisée en ce qu'un bourrelet de bordure (7) est réalisé continu et sensiblement traversant.

4. Pièce d'isolation selon l'une ou plusieurs des revendications précédentes, caractérisée en ce que vers l'extérieur, sur le bourrelet de bordure (7), est prévu en raccordement une lèvre d'étanchéité (23).

5. Pièce d'isolation selon la revendication 4, caractérisée en ce que la lèvre d'étanchéité (23) est réalisée à partir d'une saillie de taille réduite par rapport au bourrelet de bordure (7) et qui est repliée à la façon d'une lèvre.

6. Pièce d'isolation selon la revendication 4 ou 5, caractérisée en ce qu'une partie de bordure (24) de la pièce d'isolation (1) se développe par un pliage à angle droit et orienté vers l'extérieur, de la lèvre d'étanchéité (23).

7. Pièce d'isolation selon l'une ou plusieurs des revendications précédentes, caractérisée en ce que la pièce d'isolation est formée de façon thermoplastique.

8. Pièce d'isolation selon l'une ou plusieurs des revendications précédentes, caractérisée en ce qu'elle comporte une partie de fixation (21), qui est munie de perforations pour des attaches de fixation (22).

9. Pièce d'isolation selon la revendication 8, caractérisée en ce qu'un repli de collage sur la partie de fixation (21) est réalisée recouvrant une ouverture de perforation pour une attache (22).

10. Pièce d'isolation selon l'une ou plusieurs des revendications précédentes, caractérisée en ce qu'une structure à une couche est réalisée en matériau alvéolaire à cellules fermées.

11. Pièce d'isolation selon l'une ou plusieurs des revendications précédentes. caractérisée en ce qu'est réalisée une structure à deux couches (couches 1' et 1''), en un matériau alvéolaire à cellules fermées et en un matériau alvéolaire à cellules ouvertes.
